# EUROPÄISCHE PATENTSCHRIFT

(11) **EP 2 371 478 B1**
(45) Veröffentlichungstag und Bekanntmachung des Hinweises auf die Patenterteilung: **25.11.2015**
(21) Anmeldenummer: 11158507.1
(22) Anmeldetag: 16.03.2011
(51) Int. Cl.: B23Q 1/00

(54) **Spannmodul, insbesondere Nullpunktspannmodul**
Tensioning module, in particular neutral point tensioning module
Module de serrage, notamment module de serrage à point zéro

(30) Priorität: 01.04.2010 DE 102010013911
(43) Veröffentlichungstag der Anmeldung: 05.10.2011
(73) Patentinhaber: Schunk GmbH & Co. KG Spann- und Greiftechnik, 74348 Lauffen am Neckar (DE)
(72) Erfinder: Schräder, Philipp, 88512 Mengen (DE); Kleiner, Markus, 88605 Messkirch (DE)
(74) Vertreter: DREISS Patentanwälte PartG mbB

(56) Entgegenhaltungen:
- EP-A1- 1 707 307
- EP-A1- 1 762 330
- EP-A1- 2 025 444
- DE-A1- 10 123 266
- DE-A1- 10 123 271
- US-A- 4 913 481
- US-A- 5 167 405
- US-A1- 2007 261 522

## Beschreibung

Die Erfindung betrifft ein Spannmodul, und insbesondere ein Nullpunktspannmodul. Derartige Nullpunktspannmodule dienen insbesondere zum Spannen von Spannplatten, welche zu bearbeitende Werkstücke tragen. Die Spannplatten werden in der Regel mit Robotersystemen auf das Spannmodul aufgesetzt, über welches eine ortsfeste Verriegelung der Spannplatte bewerkstelligt wird.

Derartige Nullpunktspannmodule sind beispielsweise aus der EP 1 707 307 A1 vorbekannt.

Der Erfindung liegt die Aufgabe zugrunde, derartige Nullpunktspannmodule weiterzubilden. Insbesondere soll deren Aufbau und/oder deren Antrieb verbessert werden.

Diese Aufgabe wird mit einem Spannmodul, insbesondere einem Nullpunktspannmodul, mit den Merkmalen des Anspruchs 1 gelöst.

Vorgesehen ist folglich ein Spannmodul mit einer grundkörperseitigen, bolzenartigen Erhebung zum Eingriff in einen Spannring, der insbesondere in die Spannplatte integriert sein kann. Der Spannring sieht folglich eine zentrale Aufnahme vor, in welche die Erhebung des Spannmoduls eingreift. Diese Aufnahme kann als Durchgangsloch oder auch sacklochartig ausgebildet sein. Das Spannmodul sieht ferner zwei im Grundkörper bezüglich einer Mittellängsachse in radialer Richtung geführte Spannschieber vor, die in eine radial äußere Verriegelungslage zur Verriegelung des Spannrings am Grundkörper und in eine radial innere Freigabelage zur Freigabe des Spannrings verlagerbar sind. Ferner ist ein insbesondere in axialer Richtung verlagerbares, die Spannschieber betätigendes Stellglied vorgesehen. Zur Bewegungskopplung der Spannschieber mit dem Stellglied weist das Stellglied zwei Führungsnuten bzw. jeder Spannschieber eine Führungsnut auf, die in Bewegungsrichtung der Spannschieber verlaufenden Ebenen liegen und die symmetrisch bezüglich der Mittellängsachse ausgebildet sind. An den Spannschiebern bzw. am Stellglied sind dabei in die Führungsnuten eingreifende Führungsnocken vorgesehen. Eine Bewegungskopplung zwischen dem axial verlagerbaren Stellglied und dem radial verlagerbaren Spannschiebern erfolgt also durch den Eingriff der Führungsnocken in die Führungsnuten. Die Führungsnocken erstrecken sich dabei jeweils entlang einer Nockenachse, die senkrecht zur Bewegungsrichtung des jeweiligen Nockens und senkrecht zur Bewegungsrichtung des Stellglieds verläuft. Über eine derartige Anordnung kann ein Spannmodul bereitgestellt werden, das vergleichsweise klein baut und dennoch funktionssicher arbeitet. Insbesondere dann, wenn die Führungsnuten stellgliedseitig in parallel zueinander verlaufenden Ebenen angeordnet sind, und zudem zur Mittellängsachse symmetrisch ausgebildet sind, kann ein Spannmodul bereitgestellt werden, dass vergleichsweise klein baut und mit dem dennoch entsprechend hohe Kräfte übertragen werden können.
Die Spannschieber weisen dabei im Wesentlichen zwei Funktionsabschnitte auf. Einen radial äußeren Funktionsabschnitt, welcher vom Gehäuse geführt wird und einen radial inneren Funktionsabschnitt, der an der dem Stellglied zugewandten Seite schlanker ausgebildet ist als der radial äußere Funktionsabschnitt, und dort mit dem Führungsnocken bzw. der Führungsnut versehen ist.

Vorteilhafterweise verlaufen die Führungsnuten entlang jeweils einer Nutachse, die schräg zur Mittellängsachse verläuft. Hierdurch kann eine geeignete Übersetzung zwischen der Axialbewegung des Stellglieds und den radialen Bewegungen der Spannschieber erzielt werden.

Um einen geeigneten Bewegungsablauf der Spannschieber bereitzustellen, ist denkbar, dass die Nutachse entlang einer wenigstens abschnittsweise gekrümmten Linie derart verläuft, dass im Bereich der Verriegelungslage die Spannschieber in einem Krafthub und im Bereich der Entriegelungslage in einem Eilhub bewegt werden. Die Übersetzungsverhältnisse sind dabei so gewählt, dass dann, wenn ein Spannring am Spannmodul verriegelt wird, dies mit vergleichsweise hoher Kraft erfolgt. Ein Verfahren der Spannschieber in den Bereichen, in denen sie nicht mit dem Spannring zusammenwirken, kann dagegen vergleichsweise schnell mit geringerer Kraft erfolgen.

Ferner ist vorteilhaft, wenn das Stellglied von dem freien Ende einer Kolbenstange eines wenigstens einseitig druckbeaufschlagbaren Kolbens gebildet wird. Der Antrieb des Stellglieds wird folglich von einer Kolben-Zylinder-Einheit gebildet. Der Kolben kann dabei zur Bewegung in die eine Richtung mit einem Druckmittel beaufschlagbar sein; zur Bewegung in die andere Richtung ist denkbar, dass der Kolben mittels Federelementen beaufschlagt wird. Ferner ist denkbar, dass der Kolben zusätzlich zu den Federn mit Druckluft beaufschlagt wird, wodurch eine Steigerung der Betätigungskraft des Kolbens erzielbar ist.

Ferner ist erfindungsgemäß denkbar, dass die Spannschieber entlang einer Radiallinie angeordnet sind und im radial inneren Bereich einen seitlich neben der Mittellängsachse verlaufenden, den Führungsnocken bzw. die Führungsnut aufweisenden Antriebsabschnitt aufweisen. Die Antriebsabschnitte der beiden Spannschieber bilden folglich einen Zwischenraum, in welchen das Stellglied ragt. Die Führungsnocken greifen dabei in die jeweils einander gegenüberliegenden Führungsnuten ein.

Bei einer weiteren vorteilhaften Ausgestaltung ist vorgesehen, dass an der Oberseite der grundkörperseitigen Erhebung in axialer Richtung verlagerbare Aushebeglieder vorgesehen sind, die mit den Spannschiebern derart bewegungsgekoppelt sind, dass sie in der Verriegelungslage eine in axialer Richtung nicht über die Erhebung überstehende Neutralstellung und in der Freigabelage eine die Erhebung überragende Aushebestellung einnehmen. Über die Aushebeglieder kann folglich der Spannring, beziehungsweise eine am Spannring vorgesehene Spannplatte, in der Freigabelage wenigstens geringfügig angehoben werden. Hierdurch kann die Platte, da sie etwas angehoben ist, besser gehandhabt werden, insbesondere maschinell mittels beispielsweise Robotern, gegriffen werden.

Im Hinblick auf die Aushebeglieder ist denkbar, dass diese vorteilhafterweise im Grundteil in axialer Richtung verlagerbar geführt angeordnet sind. Hierdurch entfallen dann weitere Bauteile zur Führung der Aushebeglieder.

Die Spannschieber können auf der den Aushebegliedern zugewandten Seiten eine mit den Aushebegliedern zusammenwirkende Steuerkontur mit einer im radial inneren Bereich vorhandenen Absenkung und im radial äußeren Bereich, eine gegenüber der Absenkung in axialer Richtung erhabene, Erhöhung aufweisen. Die Aushebeglieder können dabei entweder unmittelbar oder auch mittelbar, unter Zwischenschaltung von Zwischenelementen, wie beispielsweise Kugeln, mit den spannschieberseitigen Steuerkonturen zusammenwirken. Bei einer derartigen Ausgestaltung hat der Spannschieber folglich eine Doppelfunktion; zum einen dient er zur Verriegelung des Spannrings am Spannmodul und zum anderen zur Betätigung der Aushebeglieder.

Um zu gewährleisten, dass die Aushebeglieder eine vordefinierte Position einnehmen, ist denkbar, dass diese in Richtung der Spannschieber federbeaufschlagt angeordnet sind.

Bei einer weiteren vorteilhaften Ausgestaltung der Erfindung ist vorgesehen, dass der Grundkörper einen die Erhebung umgebenden Ringabschnitt aufweist, der auf seiner Oberseite mehrere wenigstens geringfügig erhabene Auflageabschnitte zur Auflage des Spannrings aufweist. Dadurch, dass der Spannring nur an diesen Auflageabschnitten zur Auflage kommt, ist ein definiertes Anliegen des Spannrings am Grundkörper möglich.

Vorteilhaft ist, wenn in den Auflageabschnitten mit Druckluft beaufschlagbare Abfrageöffnungen vorgesehen sind. Bei an den Abfrageöffnungen aufliegendem Spannring kann folglich, wenn überhaupt, nur sehr wenig Druckluft aus den Abfrageöffnungen ausgeblasen werden. Sollte kein Spannring an den Abfrageöffnungen aufliegen, so strömt mehr Druckluft durch die Abfrageöffnungen. Aufgrund der unterschiedlichen Strömungsgeschwindigkeiten oder eines sich bildenden Rückstaudrucks kann rückgeschlossen werden, ob an den jeweiligen Abfrageöffnungen der Spannring anliegt oder nicht. Sollte festgestellt werden, dass der Spannring nicht an allen vorgesehenen Abfrageöffnungen anliegt, ist davon auszugehen, dass das Spannmodul nicht funktionssicher arbeitet.

Ferner kann durch Beaufschlagen der Abfrageöffnung mit Druckluft gewährleistet werden, dass die Auflageabschnitte mittels der Druckluft frei von Rückständen oder Spänen geblasen werden können. Insbesondere dann, wenn sich der Spannring dem Auflageabschnitt nähert und die Druckluft auf den Spannring auftrifft, kann sichergestellt werden, dass der Raum zwischen dem sich nähernden Spannring und dem Auflageabschnitt frei von Rückständen oder Spänen ist.

Ferner ist vorteilhaft, wenn die Auflageabschnitte eine Anlagekante zur Anlage eines spannringseitigen, in axialer Richtung überstehenden Sicherungsabschnitt zur Verdrehsicherung des Spannrings gegenüber dem Grundkörper aufweisen. Der überstehende Sicherungsabschnitt kann dabei insbesondere als eingepresster Zylinderkörper ausgebildet sein.

Ferner ist vorteilhaft, wenn im Grundkörper druckluftbeaufschlagbare Schieberabfrageöffnungen derart vorgesehen sind, dass diese in der Verriegelungslage von den Spannschiebern verdeckt beziehungsweise freigegeben und in der Freigabelage freigegeben beziehungsweise verdeckt werden. Aufgrund der unterschiedlichen Strömungsverhältnisse beziehungsweise Rückstaudrücke ist feststellbar, ob sich die Spannschieber in der Freigabelage und/oder in der Verriegelungslage befinden.

Ferner ist denkbar, dass in den Spannschiebern druckluftbeaufschlagbare Spannringabfrageöffnungen derart vorgesehen sind, dass dann, wenn der jeweilige Spannschieber am Spannring anliegt, die jeweilige Spannringabfrageöffnung vom Spannring verdeckt und dann, wenn der jeweilige Spannschieber nicht am Spannring anliegt, freigegeben ist. Auch hier kann über sich ändernde Strömungsgeschwindigkeiten beziehungsweise Rückstaudrücke bestimmt werden, ob der Spannschieber in der Verriegelungslage am Spannring anliegt oder nicht.

Bei einer weiteren vorteilhaften Ausgestaltung der Erfindung ist vorgesehen, dass ein elastisch nachgiebiger Ausgleichsabschnitt derart vorgesehen ist, dass das Stellglied bei auf in radialer Richtung auf das Stellglied wirkenden Spannkräften wenigstens bedingt elastisch nachgiebig ist. Die Spannkräfte treten als Reaktionskräfte der Spannschieber in der Verriegelungslage auf. Insofern ist der Ausgleichsabschnitt insbesondere so zu gestalten, dass eine elastische Nachgiebigkeit in Bewegungsrichtung der Spannschieber möglich ist. Insgesamt können hierdurch Fertigungsungenauigkeiten ausgeglichen werden und es kann erreicht werden, dass die Spannschieber weitgehend querkräftefrei verlagerbar sind.

Der Ausgleichsabschnitt kann insbesondere als gelenkabschnitt, und vorzugsweise als Festkörpergelenk ausgebildet sein. Insbesondere kann er durch eine Materialschwächung und weiter insbesondere durch eine Materialeinschnürung am Stellglied gebildet sein. Denkbar ist, dass am Stellglied eine entsprechende Nut beziehungsweise Ringnut vorgesehen wird.

Um die Reibung zwischen den jeweiligen Führungsnocken und der dazugehörigen Führungsnut möglichst gering zu halten, ist denkbar, dass die Führungsnocken mit der Führungsnut zusammenwirkende Rolllager aufweisen.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert ist.

Es zeigen:
- Figur 1: eine Schrägansicht auf ein erfindungsgemäßes Spannmodul mit Spannring;
- Figur 2: das Spannmodul gemäß Figur 1 ohne Spannring;
- Figur 3: die Draufsicht auf das Stellglied und die Spannschieber des Moduls gemäß Figur 1 und 2;
- Figur 4: einen Schnitt entlang der Linie IV in Figur 3;
- Figur 5: einen Schnitt entlang der Linie V in Figur 3 in der Verriegelungslage des Moduls;
- Figur 6: einen Schnitt entlang der Linie VI in Figur 3 in der Verriegelungslage des Moduls;
- Figur 7: einen Schnitt entlang der Linie V in Figur 3 in der Freigabelage des Moduls;
- Figur 8: einen Schnitt entlang VI in Figur 3 in der Freigabelage des Moduls;
- Figur 9: einen Schnitt durch das Modul entlang der Linie IX in Figur 10 in der Verriegelungslage des Moduls;
- Figur 10: eine Draufsicht auf das Modul gemäß Figur 1;
- Figur 11: einen Schnitt entlang der Linie IX in Figur 10 in der Freigabelage des Moduls;
- Figur 12: die Unteransicht des Moduls; und
- Figur 13: das Stellglied und die beiden Spannschieber gemäß Figur 3 in Einzelteildarstellung.

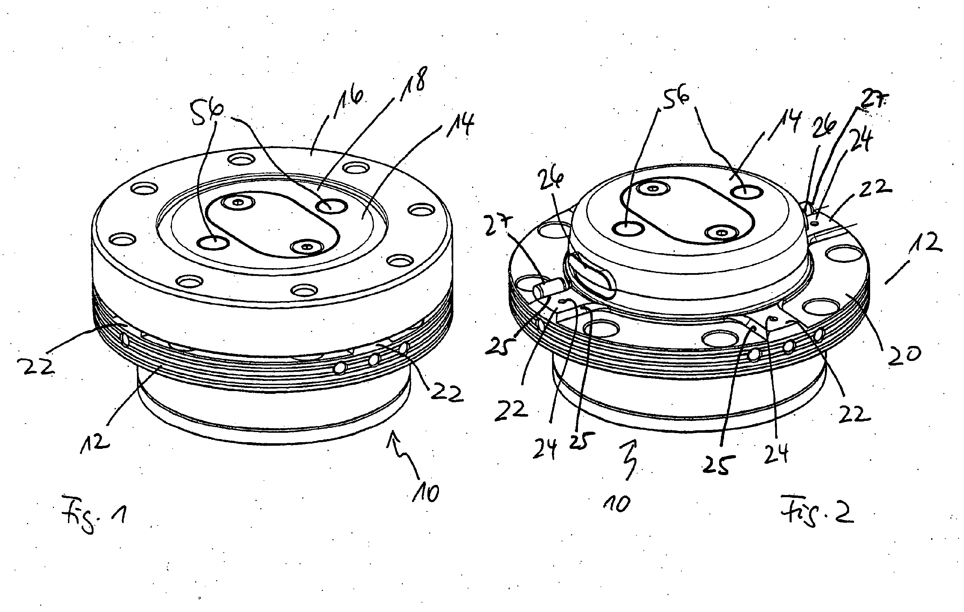

Figur 1 zeigt ein erfindungsgemäßes Spannmodul 10 mit einem Grundkörper 12 und einer bolzenartigen Erhebung 14 am Grundkörper 12. Ferner ist in Figur 1 ein Spannring 16 gezeigt, welcher eine Aufnahme 18 aufweist. In die Aufnahme 18 greift die Erhebung 14 ein.

Der Spannring 16 kann insbesondere in einen Werkstückträger oder eine Palette integriert sein, welche mittels dem Spannmodul 10 an einer vorgegebenen Position fixiert werden kann.

Aus Figur 2, welche der Figur 1 ohne Spannring 16 entspricht, wird deutlich, dass der Grundkörper 12 einen die Erhebung 14 umgebenden Ringabschnitt 20 aufweist, der als umlaufender Vollring ausgebildet ist. Bei anderen Ausführungsformen der Erfindung ist denkbar, dass der Ringabschnitt nur abschnittsweise um die Erhebung 14 angeordnet ist. Der Ringabschnitt 20 weist insgesamt vier erhabene Auflageabschnitte 22 auf, die jeweils einander gegenüberliegend vorgesehen sind. In den Auflageabschnitten 22 ist jeweils eine mit Druckluft beaufschlagbare Abfrageöffnung 24 vorgesehen. Liegt der Spannring 16, wie in Figur 1 dargestellt, an den Auflageabschnitten 22 auf, so werden die Abfrageöffnungen 24 weitgehend verschlossen. Aufgrund eines Rückstaudrucks kann festgestellt werden, ob der Spannring 16 an allen vier Auflageabschnitten 24 anliegt.

Die Auflageabschnitte 24 bilden Anlagekanten 25 zur Anlage eines spannringseitigen, in axialer Richtung überstehenden Sicherungsabschnitt in Form eines in den Spannring eingepressten Zylinderkörpers 27, der zur Verdrehsicherung des Spannrings gegenüber dem Grundkörper dient. In Figur 2 sind zwei solche Zylinderkörpers 27 gezeigt.

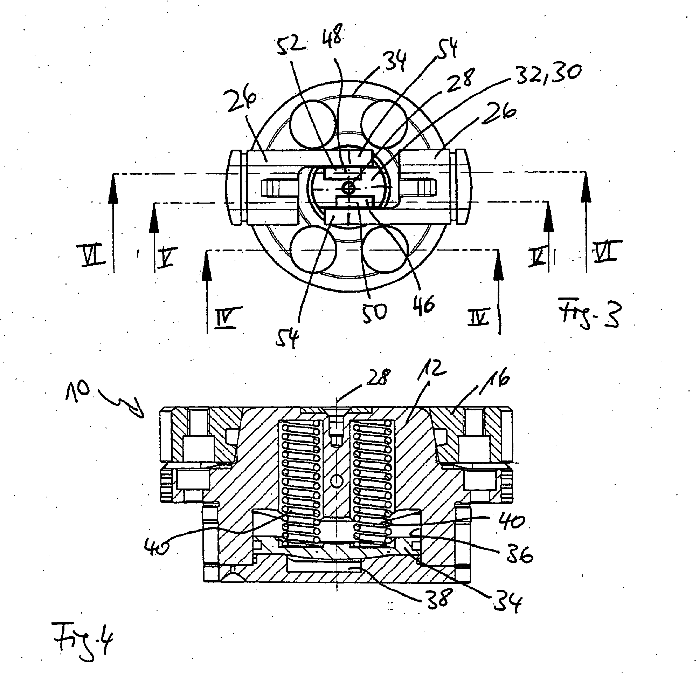

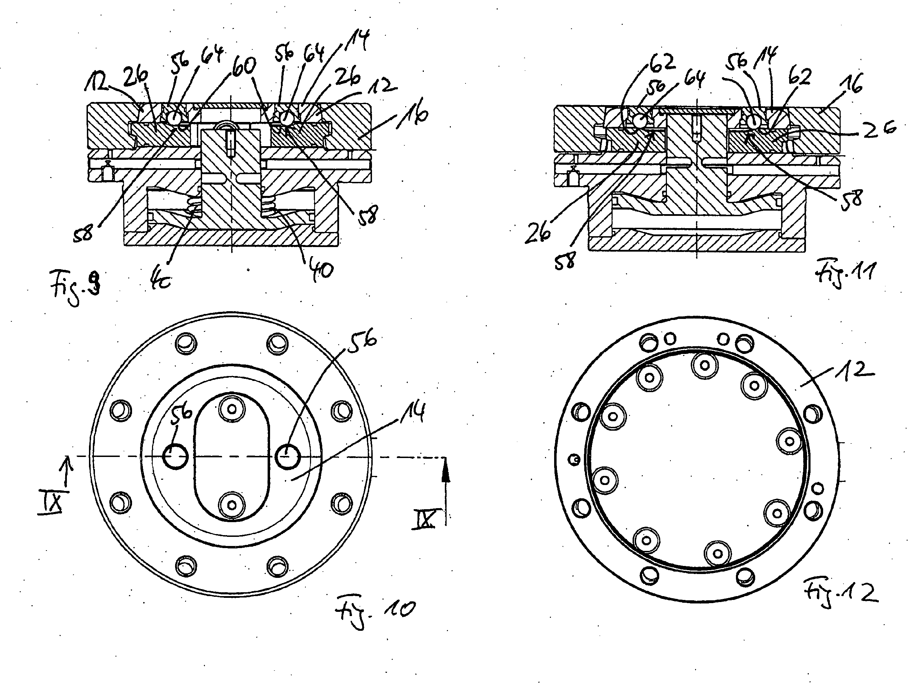

Im Grundkörper 12 sind zwei Spannschieber 26 vorgesehen. Wie insbesondere aus Figur 3 deutlich wird, sind die Spannschieber 26 bezüglich einer Mittellängsachse 28 in radialer Richtung verlagerbar. Die Spannschieber 26 durchgreifen dabei den Mantelbereich der Erhebung 14 und sind in eine radial äußere Verriegelungslage und in eine radial innere Freigabelage verlagerbar. In der Verriegelungslage wird der Spannring 16 am Spannmodul verriegelt. In der Freigabelage kann der Spannring 16 vom Grundkörper 12 in axialer Richtung abgenommen werden. Wie insbesondere aus den Schnitten gemäß Figur 9 und 11 deutlich wird, sind die Spannschieber 26 im Grundkörper 12 geführt.

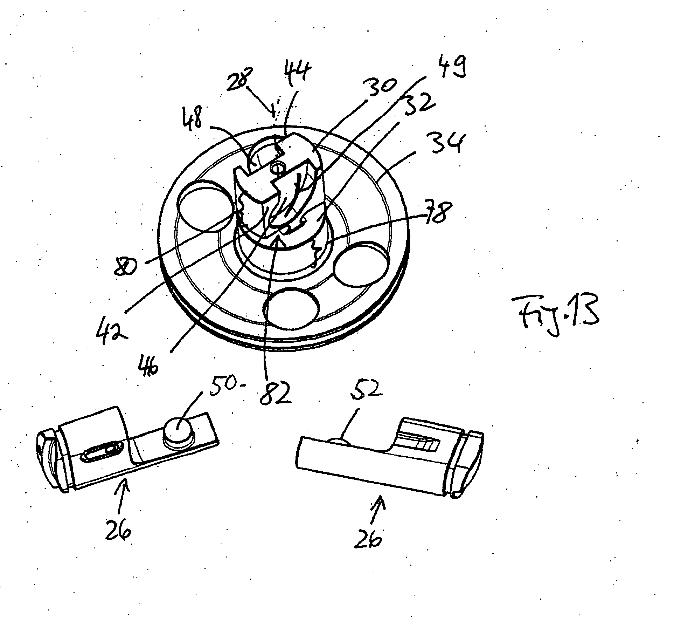

Zur synchronen Betätigung der Spannschieber 26 ist ein Stellglied 30 vorgesehen, welches von dem freien Ende einer Kolbenstange 32 gebildet wird. Die Kolbenstange 32 ist, wie insbesondere in Figur 3 und 5 bis 8 deutlich erkennbar ist, an einem Kolben 34 vorgesehen, welcher in einem grundkörperseitigen Zylinder 36 in axialer Richtung verlagerbar ist. Der Kolben 34 begrenzt dabei auf seiner den Spannschiebern 26 abgewandten Seite einen Druckraum 38, der mit einem Druckfluid zur Betätigung des Kolbens 34 druckbeaufschlagbar ist. Der Kolben 34 ist auf seiner dem Druckraum abgewandten Seite mittels insgesamt vier Druckfedern 40 kraftbeaufschlagt, was insbesondere aus dem Schnitt gemäß Figur 4 deutlich wird. Der Kolben 34 mit der Kolbenstange 32 und dem Stellglied 30 ist in Figur 13 als Einzelteil dargestellt.

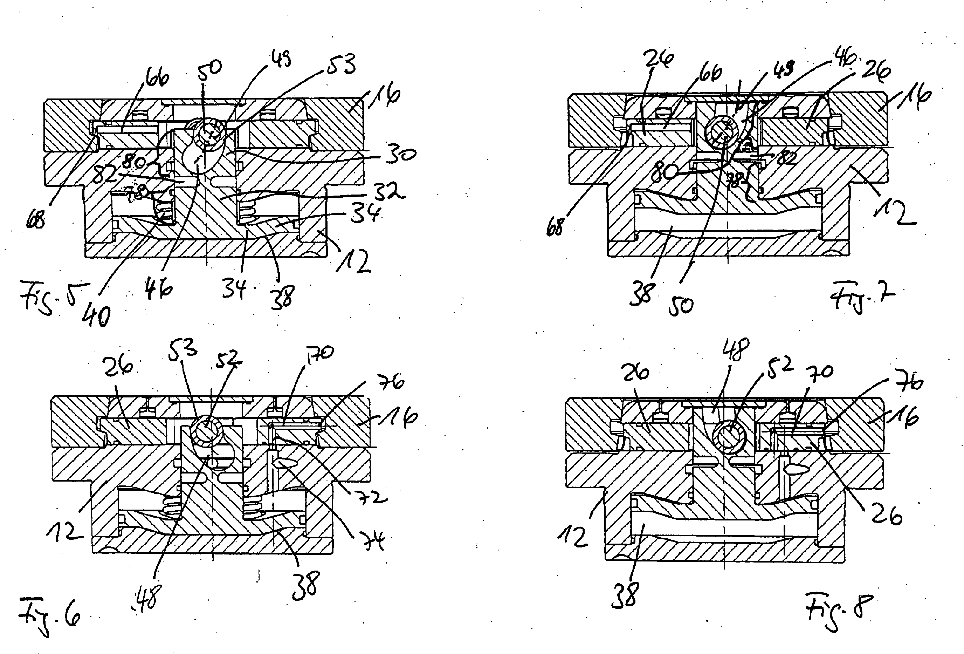

Wie insbesondere aus den Figuren 5 bis 8 und 13 deutlich wird, weist das Stellglied zwei in parallel zueinander und in Bewegungsrichtung der Spannschieber verlaufende Ebenen 42 und 44 auf, in denen jeweils eine Führungsnut 46 und 48 liegt. Der Verlauf der beiden Führungsnuten 46 und 48 ist dabei zueinander symmetrisch bezüglich der Mittellängsachse 28.

Wie ebenfalls insbesondere aus Figur 13 deutlich wird, weisen die beiden Spannschieber 26 in ihrem radial innen liegenden Bereich Führungsnocken 50 und 52 auf. Im montierten Zustand, wie er beispielsweise in Figur 3 gezeigt ist, greift der Führungsnocken 50 in die Führungsnut 46 und der Führungsnocken 52 in die Führungsnut 48. Die Nocken 50 und 52 erstrecken sich dann senkrecht zu den Ebenen 42 und 44. Zur Verringerung der Reibung zwischen den Führungsnuten 46 und 48 und den Nocken 50 und 52 können die Nocken 50 und 52 Lagerringe in Form von Rolllagern 53 vorsehen, die insbesondere in den Figuren 5 bis 8 zu erkennen sind.

Gemäß der Erfindung ist auch denkbar, dass die Führungsnuten 46 und 48 an den Spannschiebern 26 und die Führungsnocken am Stellglied 30 angeordnet sind.

Wie insbesondere aus Figur 3 und 13 deutlich wird, weisen die Spannschieber 26 im montierten Zustand seitlich neben der Mittellängsachse 28 verlaufende Antriebsabschnitte 54 auf. Auf den einander zugewandten Innenseiten der Antriebsabschnitte 54 sind die einander zugewandten Führungsnocken 50, 52 angeordnet. In Draufsicht sind die Spannschieber 26, wie aus Figur 3 deutlich wird, L-förmig.

Aus insbesondere den Figuren 5 bis 8 und der Figur 13 wird deutlich, dass die Führungsnuten 46, 48 entlang einer insgesamt schräg zur Mittellängsachse 28 verlaufenden Nutachse 49 verlaufen. Die Nutachse 49 verläuft dabei nicht entlang einer geraden Linie, sondern entlang einer gekrümmten Linie. Die Linie ist dabei derart gewählt, dass im Bereich der Verriegelungslage eine Kraftverstärkung zwischen der Axialbewegung des Kolbens 34, und damit des Stellglieds 30, und der Radialbewegung der Spannschieber 26 bereitgestellt wird (Krafthub). Im Bereich der Freigabelage, wie sie in Figur 7 und 8 dargestellt ist, wird eine geringere Kraft zur Verfügung gestellt, wobei die Spannschieber dann mit höherer Geschwindigkeit (Eilhub) verfahren werden.

Dadurch, dass die Führungsnuten 46, 48 symmetrisch zur Mittellängsachse ausgeführt sind, wird gewährleistet, dass sich die beiden Spannschieber synchron zueinander bei einer Betätigung des Kolbens 34 beziehungsweise des Stellglieds 30 bewegen.

Das Spannmodul 10 weist im Bereich der Oberseite der Erhebung 14 zwei hutartige Aushebeglieder 56 auf. Die Aushebeglieder 56, die insbesondere in den Schnitten gemäß Figur 9 und 11 deutlich zu erkennen sind, schließen in der in Figur 9 gezeigten Verriegelungslage mit der Oberseite der Erhebung weitgehend bündig ab. In der in Figur 11 dargestellten Freigabelage stehen die Aushebeglieder 56 über die Oberseite der Erhebung 14 über. Die Aushebeglieder 56 sind folglich in axialer Richtung verlagerbar. Ferner sind sie mit den Spannschiebern 26 derart bewegungsgekoppelt, dass sie in der Verriegelungslage (Figur 9) in eine in axialer Richtung nicht über der Erhebung 14 überstehende Neutralstellung und in der Freigabelage (Figur 11) eine die Erhebung 14 überragende Aushebestellung einnehmen. Die Aushebeglieder 56 sind dabei in axialer Richtung im Grundgehäuse, wie aus Figur 9 und 11 deutlich wird, geführt.

Ebenfalls aus Figur 9 und 11 wird deutlich, dass die Spannschieber 26 an ihrer Oberseite jeweils eine Steuerkontur 58 aufweisen, die im radial inneren Bereich eine Absenkung 60 und im radial äußeren Bereich eine sich an die Absenkung 60 anschließende Erhöhung 62 aufweist. Die Aushebeglieder 56 weisen auf ihrer der Steuerkontur 58 zugewandten Seite jeweils ein Zwischenelement in Form einer Kugel 64 auf. Die Kugel 64 dient zur Verringerung der Reibung im Kontaktbereich mit den Spannschiebern 26. Die Aushebeglieder 56 können allerdings auch derart ausgebildet sein, da sie unmittelbar, also ohne Zwischenschaltung der Kugel 64, mit den Spannschiebern 26, bzw. deren Steuerkonturen 58, zusammenwirken.

Durch die beschriebenen Aushebeglieder 56, die in der Freigabelage eine Aushebestellung einnehmen, wird eine mit dem Spannring 16 fest verbundene Platte, die in der Verriegelungslage an der Oberseite der Erhebung 14 anliegt, beim Überführen der Spannschieber 26 in die Freigabelage in axialer Richtung wenigstens geringfügig zusammen mit dem Spannring 16 angehoben. Wie aus Figur 11 deutlich wird, ist der Spannring 16 dort in einer leicht angehobenen Position dargestellt. Dadurch, dass der Spannring 16 samt Platte in der Freigabelage etwas angehoben ist, kann die Platte, mit einem insbesondere daran befestigten zu bearbeitenden Werkstück, leicht vom Spannmodul 10 abgehoben werden. Dies kann insbesondere maschinell bzw. mittels geeigneten Handhabungsvorrichtungen erfolgen.

In den Spannschiebern 26 sind, wie insbesondere aus den Figuren 5 und 7 deutlich wird, Druckleitungen 66 vorgesehen, welche in dem Bereich, in dem die Spannschieber 26 mit dem Spannring 16 beim Spannvorgang in Berührkontakt kommen, Spannringabfrageöffnungen 68 münden. Wie aus der Figur 5 deutlich wird, die die Verriegelungslage zeigt, werden die Spannringabfrageöffnungen 68 in der Verriegelungslage wenigstens weitgehend vom Spannring 16 verschlossen. In der Freigabelage, die in der Figur 7 dargestellt ist, sind die Spannringabfrageöffnungen 68 nicht verschlossen. Bei Druckluftbeaufschlagung der Druckleitungen 66 und damit der Spannringabfrageöffnungen 68 und Überwachen des anstehenden Drucks bzw. der Strömungsgeschwindigkeit kann rückgeschlossen werden, ob die Spannringabfrageöffnungen 68 geschlossen sind und damit am Spannring 16 sicher anliegen.

Wie aus den Figuren 6 und 8 deutlich wird, weisen die Spannschieber 26 auch Druckleitungen 70 auf, welche auf der dem Grundkörper zugewandten Seite Schieberabfrageöffnungen 72 vorsehen.

Wie aus Figur 6 deutlich wird, korrespondieren die Druckleitungen 70 bzw. bzw. die Schieberabfrageöffnungen 72 in der Verriegelungslage mit einer grundkörperseitigen Druckluftleitung 74. Wie aus Figur 8 deutlich wird, wird die Druckluftleitung 74 in der Freigabelage vom Schieber 26 verschlossen. Aufgrund der unterschiedlichen Drücke bzw. Strömungsgeschwindigkeiten in der Druckluftleitung 74 einmal in der Freigabelage und einmal in der Verriegelungslage kann folglich auf die Position der Spannschieber 26 rückgeschlossen werden. Auf dem Grundkörper 12 abgewandten Seite weisen die Druckleitungen 70 Auslasse 76 auf, die derart an den Spannschiebern 26 angeordnet sind, dass sie in der Verriegelungslage nicht vom Spannring 16 verschlossen werden.

Während des Spannvorgangs, bzw. während des Verlagerns der Spannschieber 26 in die Verriegelungslage, wirken beim Auftreffen der Spannschieber 26 auf den Spannring 16 auf die Kolbenstange 32 in Richtung der Spannschieber 26 verlaufende Kräfte. Um aufgrund dieser Kräfte ein Verkanten oder Verklemmen insbesondere der Kolbenstange 32 zu vermeiden und um Fertigungstoleranzen auszugleichen, weist die Kolbenstange 32 einen dem Kolben zugewandten Abschnitt 78 und einem dem Kolben 34 ferngelegenen Abschnitt 80, der auch das Stellglied 30 bildet, auf. Zwischen den beiden Abschnitten weist die Kolbenstange 32 eine Materialausnehmung in Form einer Einschnürung 82, die insbesondere in den Figuren 5 bis 8 deutlich zu erkennen ist, auf. Zudem ist vorgesehen, dass der Durchmesser des oberen Abschnitts 78 geringfügig kleiner ist, als der Durchmesser des unteren Abschnitts 80. Insofern wird die Kolbenstange im Grundkörper 12 im wesentlichen vom unteren Abschnitt 80 in axialer Richtung geführt.

Die Einschnürung 82 ist derart, dass der obere Abschnitt 80 der Kolbenstange bei Auftreten von in radialer Richtung wirkenden Kräften wenigstens geringfügig elastisch nachgiebig ist. Aufgrund des geringeren Durchmessers des Abschnitts 78 gegenüber dem Abschnitt 80 kann ein zumindest geringfügiges Nachgeben des Abschnitts 80 gegenüber dem unteren Abschnitt 78 ermöglicht werden. Insgesamt wird hierdurch einem Verkanten oder Verklemmen der Kolbenstange 32 entgegengewirkt und einer Anlage beider Spannschieber 26 am Spannring 16 gewährleistet.

## Patentansprüche

1. Spannmodul (10), insbesondere Nullpunktspannmodul, mit einem Grundkörper (12), mit einer grundkörperseitigen, bolzenartigen Erhebung (14) zum Eingriff in einen Spannring (16), mit mindestens zwei im Grundkörper (12) bezüglich einer Mittellängsachse (28) in radialer Richtung geführten Spannschiebern (26), die in eine radial äußere Verriegelungslage zur Verrieglung des Spannrings (16) am Grundkörper (12) und in eine radial innere Freigabelage zur Freigabe des Spannrings (16) verlagerbar sind, und mit insbesondere einem verlagerbaren, die Spannschieber (26) betätigenden Stellglied (30), wobei zur Bewegungskopplung der Spannschieber (26) mit dem Stellglied (30) das Stellglied (30) bzw. die Spannschieber Führungsnuten (46, 48) aufweist bzw. aufweisen, die in Bewegungsrichtung der Spannschieber verlaufenden Ebenen (42, 44) liegen und die symmetrisch bezüglich der Mittellängsachse (28) verlaufend ausgebildet sind, wobei an den Spannschiebern (26) bzw. am Stellglied (30) in die Führungsnuten (46, 48) eingreifende Führungsnocken (50, 52) vorgesehen sind, wobei die Spannschieber (26) jeweils einen radial äußeren Funktionsabschnitt und einen radial inneren Funktionsabschnitt aufweisen, wobei der radial innere Funktionsabschnitt seitlich neben der Mittellängsachse (28) verläuft und an der dem Stellglied (30) zugewandten Seite schlanker ausgebildet ist als der radial äußere Funktionsabschnitt, und wobei der radial innere Funktionsabschnitt dort mit dem Führungsnocken (50, 52) bzw. der Führungsnut (46, 48) versehen ist.

2. Spannmodul (10), nach Anspruch 1, **dadurch gekennzeichnet, dass** die Führungsnuten (46, 48) jeweils entlang einer schräg zur Mittellängsachse (28) verlaufenden Nutachse (49) verlaufen.

3. Spannmodul (10), nach Anspruch 1 oder 2, **dadurch gekennzeichnet, dass** die Nutachse (49) entlang einer wenigstens abschnittsweisen gekrümmten Linie derart verläuft, dass im Bereich der Verriegelungslage die Spannschieber (26) in einem Krafthub und im Bereich der Entrieglungslage in einem Eilhub bewegt werden.

4. Spannmodul (10) nach Anspruch 1, 2 oder 3, **dadurch gekennzeichnet, dass** das Stellglied (30) von dem freien Ende einer Kolbenstange (32) eines wenigstens einseitig druckbeaufschlagbaren Kolbens (34) gebildet wird.

5. Spannmodul (10) nach einem der vorhergehenden Ansprüche, **dadurch gekennzeichnet, dass** der Grundkörper (12) einen die Erhebung (14) umgebenden Ringabschnitt (20) aufweist, der auf seiner Oberseite mehrere wenigstens geringfügig erhabene Auflageabschnitte (22) zur Auflage des Spannrings (16) aufweist.

6. Spannmodul (10) nach Anspruch 5, **dadurch gekennzeichnet, dass** in den Auflageabschnitten (22) mit Druckluft beaufschlagbare Abfrageöffnungen (24) vorgesehen sind.

7. Spannmodul (10) nach Anspruch 5 oder 6 **dadurch gekennzeichnet, dass** die Auflageabschnitte (22) mindestens eine Anlagekante zur Anlage eines spannringseitigen, in axialer Richtung überstehenden Sicherungsabschnitts zur Verdrehsicherung des Spannrings (16) gegenüber dem Grundkörper (12) aufweisen.

8. Spannmodul (10) nach einem der vorhergehenden Ansprüche, **dadurch gekennzeichnet, dass** ein elastisch nachgiebiger Ausgleichsabschnitt (82) derart vorgesehen ist, dass das Stellglied (30) bei auf in radialer Richtung auf das Stellglied (30) wirkenden Spannkräften elastisch nachgiebig ist.

9. Spannmodul (10), nach Anspruch 8, **dadurch gekennzeichnet, dass** der Ausgleichsabschnitt durch eine Materialschwächung (82) gebildet ist.

10. Spannmodul (10) nach einem der vorhergehenden Ansprüche, **dadurch gekennzeichnet, dass** die Führungsnocken (50, 52) jeweils ein mit der jeweiligen Führungsnut (46, 48) zusammenwirkendes Rollenlager (53) vorsehen.

## Claims

1. A tensioning module (10), in particular a neutral point tensioning module, having a base body (12), having a boltlike protrusion (14) toward the base body for engagement with a tension ring (16), having at least two tensioning slides (26) guided in the radial direction relative to a center longitudinal axis (28) that are shiftable into a radially outer locking position for locking the tension ring (16) to the base body (12) and into a radially inner release position for releasing the tension ring (16), and having in particular a shiftable actuator (30) actuating the tensioning slide (26), wherein for motion coupling of the tensioning slide (26) to the actuator (30), the actuator (30) or the tensioning slides have guide grooves (46, 48) that are located in planes (42, 44) extending in the direction of motion of the tensioning slides and are embodied as extending symmetrically relative to the center longitudinal axis (28); wherein guide cams (50, 52) engaging the guide grooves (46, 48) at the tensioning slides (26) or the actuator (30) are provided; wherein the tensioning slides (26) each have a radially outer function portion and a radially inner function portion, and the radially inner function portion extends laterally beside the center longitudinal axis (28) and is embodied on the side toward the actuator (30) as more slender than the radially outer function portion; and wherein the radially inner function portion is provided there with the guide cam (50, 52) or the guide groove (46, 48).

2. The tensioning module (10) of claim 1, **characterized in that** the guide grooves (46, 48) each extend along a groove axis (49) that extends obliquely to the center longitudinal axis (28).

3. The tensioning module (10) of claim 1 or 2, **characterized in that** the groove axis (49) extends in such a manner along a line that is at least intermittently curved, that in the vicinity of the locking position, the tensioning slides (26) are moved in a power stroke, and in the region of the unlocking position they are moved in a fast stroke.

4. The tensioning module (10) of claim 1, 2 or 3, **characterized in that** the actuator (30) is formed by the free end of a piston rod (32) of a piston (34) that can be subjected to pressure on at least one end.

5. The tensioning module (10) of one of the foregoing claims, **characterized in that** the base body (12) has an annular portion (20), surrounding the protrusion (14), which annular portion, on its upper side, has a plurality of at least slightly raised support portions (22) for supporting the tension ring (16).

6. The tensioning module (10) of claim 5, **characterized in that** interrogation openings (24) that can be subjected to compressed air are provided in the support portions (22).

7. The tensioning module (10) of claim 5 or 6, **characterized in that** the support portions (22) have at least one contact edge for contacting a securing portion, on the side toward the tension ring and projecting in the axial direction, for securing the tension ring (16) rotationally relative to the base body (12).

8. The tensioning module (10) of one of the foregoing claims, **characterized in that** an elastically yielding compensation portion (82) is provided, in such a manner that the actuator (30), in the presence of tensioning forces acting in the radial direction on the actuator (30), is elastically yielding.

9. The tensioning module (10) of claim 8, **characterized in that** the compensation portion is formed by a materially weakened area (82).

10. The tensioning module (10) of one of the foregoing claims, **characterized in that** the guide cams (50, 52) each provide a roller bearing (53) cooperating with the respective guide groove (46, 48).

## Revendications

1. Module de serrage (10), en particulier module de serrage à point zéro, comprenant un corps de base (12), une bosse (14) de type boulon située du côté du corps de base et destinée à l'engagement dans un anneau de serrage (16), au moins deux coulisseaux de serrage (26) qui sont guidés dans ledit corps de base (12) dans la direction radiale par rapport à un axe longitudinal médian (28) et qui peuvent être déplacés dans une position de verrouillage radialement extérieure pour verrouiller ledit anneau de serrage (16) sur le corps de base (12) et dans une position de libération radialement intérieure pour libérer ledit anneau de serrage (16), ainsi que, en particulier, un actionneur (30) déplaçable actionnant lesdits coulisseaux de serrage (26), dans lequel, pour accoupler en mouvement les coulisseaux de serrage (26) avec ledit actionneur (30), l'actionneur (30) ou bien les coulisseaux de serrage présente ou bien présentent des rainures de guidage (46, 48) qui sont situées dans des plans (42, 44) s'étendant dans la direction de mouvement des coulisseaux de serrage et qui sont réalisées de manière à s'étendre symétriquement par rapport à l'axe longitudinal médian (28), dans lequel des bossages de guidage (50, 52) engrenant dans les rainures de guidage (46, 48) sont prévus sur les coulisseaux de serrage (26) ou bien sur l'actionneur (30), dans lequel les coulisseaux de serrage (26) présentent chacun une section fonctionnelle radialement extérieure et une section fonctionnelle radialement intérieure, la section fonctionnelle radialement intérieure s'étendant latéralement à côté de l'axe longitudinal médian (28) et étant réalisée, sur la face montrant vers l'actionneur (30), de manière plus mince que la section fonctionnelle radialement extérieure, et dans lequel la section fonctionnelle radialement intérieure y est munie du bossage de guidage (50, 52) ou bien de la rainure de guidage (46, 48).

2. Module de serrage (10) selon la revendication 1, **caractérisé par le fait que** les rainures de guidage (46, 48) s'étendent chacune le long d'un axe de rainure (49) s'étendant en biais par rapport à l'axe longitudinal médian (28).

3. Module de serrage (10) selon la revendication 1 ou 2, **caractérisé par le fait que** ledit axe de rainure (49) s'étend le long d'une ligne courbée au moins par sections, de telle manière que, au niveau de la position de verrouillage, les coulisseaux de serrage (26) sont déplacés en une course de force et, au niveau de la position de déverrouillage, ils sont déplacés en une course accélérée.

4. Module de serrage (10) selon la revendication 1, 2 ou 3, **caractérisé par le fait que** ledit actionneur (30) est formé par l'extrémité libre d'une tige de piston (32) d'un piston (34) apte à être soumis à pression sur au moins un côté.

5. Module de serrage (10) selon l'une quelconque des revendications précédentes, **caractérisé par le fait que** ledit corps de base (12) présente une section annulaire (20) qui entoure ladite bosse (14) et qui présente, sur sa face supérieure, une pluralité de sections d'appui (22) au moins légèrement élevées destinées à l'appui de l'anneau de serrage (16).

6. Module de serrage (10) selon la revendication 5, **caractérisé par le fait que** des ouvertures d'interrogation (24) aptes à être alimentées en air comprimé sont prévues dans les sections d'appui (22).

7. Module de serrage (10) selon la revendication 5 ou 6, **caractérisé par le fait que** les sections d'appui (22) présentent au moins un bord d'application pour appliquer une section de sûreté côté anneau de serrage qui fait saillie dans la direction axiale et est destinée à sécuriser ledit anneau de serrage (16) contre une rotation par rapport au corps de base (12).

8. Module de serrage (10) selon l'une quelconque des revendications précédentes, **caractérisé par le fait qu'**une section de compensation (82) élastiquement flexible est prévue de telle manière que ledit actionneur (30) est élastiquement flexible lorsque des forces de serrage agissent dans la direction radiale sur l'actionneur (30).

9. Module de serrage (10) selon la revendication 8, **caractérisé par le fait que** ladite section de compensation est formée par un affaiblissement de matière (82).

10. Module de serrage (10) selon l'une quelconque des revendications précédentes, **caractérisé par le fait que** les bossages de guidage (50, 52) prévoient chacun un roulement à rouleaux (53) agissant de concert avec la rainure de guidage (46, 48) respective.
